# EUROPÄISCHE PATENTSCHRIFT

(11) **EP 1 353 538 B1**
(45) Veröffentlichungstag und Bekanntmachung des Hinweises auf die Patenterteilung: **30.08.2006**
(21) Anmeldenummer: 03008170.7
(22) Anmeldetag: 08.04.2003
(51) Int. Cl.: H05B 39/00

(54) **Programmierbarer Dämmerungsschalter**
Programmable ambient-light circuit
Circuit de lumière ambiante programmable

(30) Priorität: 08.04.2002 DE 10215394
(43) Veröffentlichungstag der Anmeldung: 15.10.2003
(73) Patentinhaber: Theben AG, 72401 Haigerloch (DE)
(72) Erfinder: Gerhard, Peter, 72108 Rottenburg (DE); Renner, Hans, 72351 Geislingen (DE)
(74) Vertreter: Neymeyer, Franz

(56) Entgegenhaltungen:
- EP-A- 1 162 831
- WO-A-00/22881
- US-A- 5 637 093
- US-A- 5 701 058

## Beschreibung

Die Erfindung betrifft einen programmierbaren Dämmerungsschalter bestehend aus einem ein zur Umgebungshelligkeit proportionales Steuersignal erzeugenden Lichtsensor, einer programmierbaren Hauptrecheneinheit, der das Steuersignal des Lichtsensors zur Steuerung von Schaltvorgängen digitalisiert zuführbar ist, wobei die Hauptrecheneinheit bei einem Einschaltschwellwert des Steuersignals einen Verbraucher einschaltet und diesen bei einem Ausschaltschwellwert des Steuersignals wieder ausschaltet, wobei die Helligkeitswerte der Schwellwerte, bei welchen eine Einschaltung und/oder eine Ausschaltung erfolgt als numerische Werte vorgebbar sind.

Programmierbare Dämmerungsschalter der gattungsgemäßen Art sind schon seit langem bekannt. Hier sind beispielsweise die Druckschriften DE 299 12 801 U1 und DE 195 24 931 C2 zu nennen.

Allgemein wird bei den aus der Praxis bekannten Dämmerungsschaltern die Schaltschwelle über ein Potentiometer eingestellt. Diese Potentiometer sind mit einer von außen zugänglichen Einstellwelle versehen, durch deren Drehung die Schaltschwelle des Dämmerungsschalters einstellbar ist. Mit Schaltschwelle ist hierbei der Schaltpunkt gemeint, bei welchem ein Schaltvorgang des Dämmerungsschalters bei Vorliegen einer gewünschten Umgebungshelligkeit bewirkt wird.

Um nun eine gewisse Orientierung bei der Einstellung der Schaltschwelle zu haben, ist im Bereich dieser Einstellwelle eine Skala vorgesehen, welche in den meisten Fällen als relative Skala ausgeführt ist, d.h., daß diese aus einem, um die Schaltwelle herum laufenden, dicker werdenden Balken mit den Bezeichnungen "min" und "max" ausgeführt ist.

Anhand solcher Einstellvorrichtungen ist es zwangsläufig sehr schwierig, eine gewünschte Schaltschwelle von z.B. 15 Lux präzise einzustellen. Aber selbst wenn im Bereich der Einstellwelle eine Lux-Skala mit numerischen Angaben der einzustellenden Luxwerte vorgegeben wäre, so wäre eine genaue Einstellung eines Luxwertes zwar anhand der Skala möglich, diese entspricht aber nicht dem tatsächlich vorliegenden Helligkeitswert in Lux, bei welchem der Dämmerungsschalter den Schaltvorgang bewirkt.

Dies liegt daran, daß die in der Regel verwendeten Lichtsensoren, wie Fotowiderstände oder Fotodioden, relativ große Fertigungstoleranzen aufweisen, so daß diese bei einem fest eingestellten Luxwert einen Schaltvorgang stets bei unterschiedlichen Helligkeitswerten der Umgebungshelligkeit bewirken. Deshalb sind in der Regel auch nur diese relativen Skalen an einem Dämmerungsschalter vorgesehen, da ohnehin eine präzise Einstellung der gewünschten Schaltschwelle nur durch mehrfaches Ausprobieren einstellbar ist. Dabei ist demzufolge auch der numerische, tatsächlich vorliegende Helligkeitswert in Lux für die Schaltschwelle für den Bediener relativ ungenau bzw. wird er durch diesen nur verunsichert, da er bei mehreren gleichartigen Dämmerungsschaltern seine Einstellwelle in unterschiedliche Stellungen bringen muß, um den gleichen Schaltpunkt bei gleicher Helligkeit erreichen zu können.

D.h., daß aufgrund dieser vorgesehenen Potentiometer und der großen Fertigungstoleranzen der Lichtsensoren gleiche Einstellungen in unterschiedlichen Geräten unterschiedliche Schaltschwellen bzw. Schaltpunkte bei gleicher Umgebungshelligkeit bewirken. Somit kann ein Dämmerungsschalter mit einer solchen Einstellvorrichtung nur sehr ungenau auf einen gewünschten Helligkeitswert eingestellt werden. In der Praxis muß die Einstellung deshalb meist mehrfach nachjustiert werden, bis der gewünschte Schaltpunkt bei einem gewünschten Helligkeitswert tatsächlich eingestellt ist.

Desweiteren bieten die meisten bekannten Dämmerungsschalter eine Schalthysterese, die größer als 1 ist. Dies bedeutet, daß die Helligkeitsschwelle, bei welcher der Dämmerungsschalter einschaltet, kleiner ist als die Helligkeitsschwelle, bei welcher der Dämmerungsschalter ausschaltet. Auch dieser Umstand bringt es mit sich, daß selbst bei einer präzisen Einstellung, beispielsweise des Einschaltpunktes, der Ausschaltpunkt nicht gewünscht einstellbar ist, da dieser von der Größe der Schalthysterese des Dämmerungsschalters abhängig ist. Auch hierdurch wird eine ständige Nachjustierung bedingt, wobei, um in zufriedenstellender Weise einen möglichst optimalen Einschaltpunkt und Ausschaltpunkt zu erreichen, stets nur Annäherungswerte einstellbar sind.

Beim Gegenstand der Druckschrift DE 195 24 931 C2 wird zur präziseren Einstellung des Einschaltzeitpunktes vorgeschlagen, daß zur Erfassung eines gewünschten Schaltpunktes, das bei einem gewünschten Helligkeitswert vom Lichtsensor erzeugte elektrische Signal zur Bildung eines Referenzsignals durch Betätigung einer Taste einem elektronischen Zähler zugeführt oder in einem elektronischen Speicher eingelesen und abgespeichert wird.

Dieses Referenzsignal wird in einem Komparator oder einem Operationsverstärker mit dem jeweils aktuellen, vom Lichtsensor erzeugten Signal, ständig verglichen und bei Koinzidenz der beiden Signale wird ein Relais bzw. unmittelbar ein Verbraucher geschaltet. Dies bedeutet, daß beim Gegenstand der DE 195 24 931 C2 die Bedienungsperson zum Einstellen der gewünschten Schaltschwelle stets bis zur Morgendämmerung (oder Abenddämmerung) abwarten muß, um dann bei der gewünschten Helligkeit die entsprechende Taste am Dämmerungsschalter zu drücken, um dieses Referenzsignal zu erzeugen. Eine Einstellung der Schaltschwelle, beispielsweise durch den Monteur tagsüber, ist somit nicht möglich, da die normale Tageshelligkeit stets erheblich über der Schaltschwelle bzw. dem gewünschten Schaltpunkt des Dämmerungsschalters liegt.

Beim Gegenstand der DE 299 12 801 U1 wird die "Einschaltschwelle" mittels eines Potentiometers eingestellt. Um nun hier eine Schalthysterese zu erreichen, welche kleiner als 1 ist, wird vorgeschlagen, daß in Abhängigkeit von dieser Einschaltschwelle durch die Recheneinheit des Dämmerungsschalters die Ausschaltschwelle mit einem fest vorgegebenen Faktor berechnet wird und somit vom Benutzer nicht beeinflußbar ist.

Mit dieser Lösung wird zwar den physiologischen Eigenschaften des menschlichen Auges bezüglich dessen Helligkeitsempfinden Rechnung getragen, dieses Helligkeitsempfinden kann aber vom Benutzer nicht konkret auf seine eigenen Bedürfnisse an den Dämmerungsschalter angepaßt werden.

Weiter ist aus der DE 196 32 881 A1 eine programmgesteuerte Schaltvorrichtung mit Menüsteuerung bekannt, die mit einem ausgangsseitig angeschlossenen und durch die Schaltvorrichtung gesteuerten Schalter unter anderem auch als Dämmerungsschalter einsetzbar sein soll. Hier können zwar für den Helligkeitswert numerische Werte in Stufen von 10 Lux eingegeben werden. Ein Berücksichtigung der tatsächlichen Helligkeit findet hier nicht statt, so daß auch hier der gewünschte Schaltzeitpunkt zum ein- bzw. Ausschalten nur durch mehrfaches Nachjustieren gefunden werden kann. Dies bedeutet auch, daß der Anwender nur bedingt eine sinnvolle Programmierung tagsüber vornehmen kann, da er die eingegebenen Luxwerte nur schätzen kann und keinen Anhaltspunkt hat, ob die programmierten Werte auch tatsächlich einer gewünschten Helligkeit für den entsprechenden Schaltzeitpunkt oder Schwellwert für einen Schaltvorgang entsprechen. Es muß also stets bis zur Dämmerung oder bis zum Morgengrauen abgewartet werden, um feststellen zu können, ob der eingestellte numerische Wert auch tatsächlich der gewünschten "Schalthelligkeit" entspricht.

Demgemäß liegt der Erfindung die Aufgabe zugrunde, einen Dämmerungsschalter der gattungsgemäßen Art derart zu verbessern, daß die Einstellung zumindest einer der Schaltpunkte (Einschaltpunkt oder Ausschaltpunkt) präzise vornehmbar ist.

Die Aufgabe wird erfindungsgemäß dadurch gelöst, daß zur Zwischenspeicherung der Helligkeitswert der Schwellwerte ein Helligkeitsspeicherbereich vorgesehen ist, in welchen die Helligkeitswerte der Schwellwerte über Eingabetasten einer Eingabeeinheit als numerische Werte eingebbar sind, und daß ein Kennlinienspeicherbereich zum Ablegen einer digitalisierten Kennlinie des Lichtsensors vorgesehen ist, und daß die Hauptrecheneinheit aus den eingegebenen Helligkeitswerten der Schwellwerte, der Kennlinie des Lichtsensors und dem Steuersignal des Lichtsensors die Schaltpunkte zum Ein- bzw. Ausschalten eines Verbrauchers berechnet.

Durch die erfindungsgemäße Ausgestaltung ist die Einstellung präziser Schaltpunkte bzw. Schaltschwellen am Dämmerungsschalter sicher durchführbar. Dazu ist vorgesehen, daß dieser Dämmerungsschalter einen Helligkeitsspeicherbereich aufweist, in welchen die Helligkeitswerte der Schwellwerte, bei welchen eine Einschaltung und/oder eine Ausschaltung erfolgt, über Eingabetasten einer Eingabeeinheit als numerische Werte eingebbar sind.

Dies bedeutet, daß beispielsweise über eine numerische Tastatur der Helligkeitswert von beispielsweise 15 Lux in den Speicherbereich eingelesen wird und somit als Referenzwert für den Schaltpunkt dient. Um nun auch bei einer Helligkeit, die tatsächlich diesen eingestellten 15 Lux entspricht, den Schaltvorgang zu bewirken, ist desweiteren vorgesehen, daß die Kennlinie des Lichtsensors in einen Kennlinienspeicherbereich eingelesen wird. Damit kann die Hauptrecheneinheit des Dämmerungsschalters nunmehr aus den eingegebenen Helligkeitswerten der Schwellwerte und dieser Kennlinie sowie dem vom Lichtsensor erzeugten Steuersignal die präzisen Schaltpunkte zum Ein- bzw. Ausschalten eines Verbrauchers berechnen. D.h., daß aufgrund dieser internen Berechnung sowie der numerischen Eingabe der Benutzer unabhängig von der konkret vorliegenden Tageshelligkeit, beispielsweise den gewünschten Einschaltpunkt bzw. zugehörigen Schwellwert numerisch vorgeben kann und der erfindungsgemäße Dämmerungsschalter auch tatsächlich bei diesem eingegebenen Schwellwert und damit bei einer gewünschten Umgebungshelligkeit den gewünschten Schaltvorgang bewirkt.

Zur Vereinfachung der Eingabe kann dabei gemäß Anspruch 2 vorgesehen sein, daß zur Anzeige und Kontrolle der numerisch eingegebenen Helligkeitswerte eine Display-Anzeige vorgesehen ist. Durch diese Display-Anzeige kann auch in vereinfachter Form eine Tastatur vorgesehen sein, bei welcher beispielsweise durch eine Programmtaste vom Betriebsmodus in einen Programmiermodus umgeschaltet wird, in welchem durch zwei weitere Eingabetasten die Helligkeitswerte nach oben oder nach unten korrigierbar sind, wie dies beispielsweise beim Stellen von digitalen Uhren ebenfalls der Fall ist. Damit ist eine äußerst einfache und präzise Programmierung eines Schwellwertes, beispielsweise zum Einschalten eines Verbrauchers durch den Dämmerungsschalter, sicher ermöglicht.

Gemäß Anspruch 3 kann vorgesehen sein, daß der Helligkeitsspeicherbereich in einen Einschaltspeicher und einen Ausschaltspeicher aufgeteilt ist. Damit können der Hauptrecheneinrichtung bzw. dem Helligkeitsspeicher zwei Helligkeitswerte übergeben werden, von welchen der eine zum Einschalten und der andere zum Ausschalten eines Verbrauchers herangezogen werden kann.

Dabei ist vorgesehen, daß die Helligkeitswerte zum Einschalten separat in den Einschaltspeicherbereich und die Helligkeitswerte zum Ausschalten in den Ausschaltspeicherbereich eingegeben werden. Die Hauptrecheneinheit berechnet aus diesen eingegebenen Helligkeitswerten unabhängig voneinander die Schaltpunkte zum Einschalten und zum Ausschalten. Durch diese erfindungsgemäße Ausgestaltung ist nicht nur eine präzise Eingabe der Schaltpunkte bzw. der zugehörigen Helligkeitswerte möglich, sondern der Benutzer kann auch nach eigenem Empfinden unabhängig voneinander den Einschaltschwellwert und den Ausschaltschwellwert bestimmen. Damit wird dem unterschiedlichen Helligkeitsempfinden unterschiedlicher Benutzer Rechnung getragen, so daß unterschiedliche Benutzer den Dämmerungsschalter bezüglich seines Einschalt- und Ausschaltverhaltens dem eigenen Lichtempfinden bzw. Helligkeitsempfinden anpassen können. Damit ist auch in einfachster Weise eine Schalthysterese einstellbar, die kleiner als 1 ist.

Zur weiteren benutzerfreundlichen Ausgestaltung kann gemäß Anspruch 4 vorgesehen sein, daß eine über die Eingabetasten einstellbare Zeitschaltuhr vorgesehen ist, über welche zusätzlich zu den helligkeitsabhängigen Schaltpunkten, uhrzeitabhängige Schaltzeitpunkte zum Ein- und Ausschalten eingebbar sind. Die aktuelle Uhrzeit sowie die einstellbaren Schaltzeitpunkte sind dabei wiederum in der Display-Anzeige darstellbar.

Durch diese erfindungsgemäße Ausgestaltung gemäß Anspruch 4 ist ein Verbraucher beispielsweise in der Nacht unabhängig von der gerade vorliegenden Helligkeit ein- und ausschaltbar. Desweiteren kann durch die integrierte Zeitschaltuhr die Hauptrecheneinheit stets in einfacher Weise ermitteln, ob es sich beim Erreichen einer Schaltschwelle um die Einschaltschwelle oder die Ausschaltschwelle handelt. Beispielsweise kann die Programmstruktur des Dämmerungsschalters derart ausgelegt sein, daß es sich vor 12 Uhr mittags stets nur um die Ausschaltschwelle und nach 12 Uhr mittags stets nur um die Einschaltschwelle handeln kann. Damit sind Fehlschaltungen des Dämmerungsschalters sicher ausgeschlossen.

Um nun die Helligkeitswerte sowie die Schaltzeitpunkte zur Einstellung unabhängig voneinander anwählen zu können, kann gemäß Anspruch 5 vorgesehen sein, daß die Eingabeeinheit eine Programmwahltaste aufweist, deren Betätigung einen Wechsel des Programmiermodus zwischen der Schaltschwelleneingabe und der Schaltzeitpunkteingabe bewirkt. Dieser Programmwechsel ist gemäß Anspruch 5 ebenfalls in der Display-Anzeige anzeigbar. Durch diese Ausgestaltung wird erreicht, daß der Dämmerungsschalter über die Programmwahltaste in unterschiedliche Betriebszustände versetzt werden kann. So ist vorgesehen, daß über diese Programmwahltaste der Dämmerungsschalter bei ein- oder mehrmaliger Betätigung aus seinem normalen Betriebszustand in den Programmierzustand zur Eingabe der Schwellwerte für die Helligkeit umgeschaltet wird. Über zusätzliche, wie bereits oben erwähnt, Eingabetasten sind die verschiedenen Betriebsparameter veränderbar.

Weiter dient die Programmwahltaste im Helligkeitsprogrammiermodus zum Anwählen des Einschaltschwellwertes und des Ausschaltschwellwertes, wobei nach Programmierung des letzten Schwellwertes durch weitere Betätigung der Programmwahltaste ein Wechsel zum Schaltzeitpunktmodus bewirkt wird. In diesem Schaltzeitpunktmodus kann ebenfalls über die Betätigung der Programmierwahltaste zwischen der Einschaltprogrammierung und der Ausschaltprogrammierung gewechselt werden. Ist die Schaltzeitprogrammierung beendet, d.h., sowohl die Einschaltzeit als auch die Ausschaltzeit eingegeben, so kann durch erneutes Drücken der Programmwahltaste der erfindungsgemäße Dämmerungsschalter wieder in seinen normalen Betriebszustand versetzt werden.

Gemäß Anspruch 6 kann vorgesehen sein, daß dem Einschaltspeicherbereich ein Einschaltverzögerungsspeicher zugeordnet ist, in welchen über die Eingabetasten eine Einschaltverzögerungswert numerisch eingebbar ist. Desweiteren kann gemäß Anspruch 6 vorgesehen sein, daß dem Ausschaltspeicherbereich ein Ausschaltverzögerungsspeicher zugeordnet ist, in welchen über die Eingabetasten eine Ausschaltverzögerungswert eingebbar ist. Diese eingestellten Verzögerungswerte sind desweiteren in der Display-Anzeige anzeigbar.

Durch diese Ausgestaltung gemäß Anspruch 6 ist es der Bedienungsperson möglich, für die Einschaltschwelle unabhängig von der Ausschaltschwelle einen eigenen Einschaltverzögerungswert als numerischen Wert einzugeben. Desgleichen gilt für den Ausschaltverzögerungswert, welcher ebenfalls unabhängig vom Einschaltverzögerungswert als numerischer Wert eingebbar ist. Bei diesen Verzögerungswerten kann es sich um konkret einzugebende Zeitwerte, beispielsweise in Sekunden handeln. Weiter kann auch vorgesehen sein, daß eine Werteskale z.B. von 1 bis 20 vorgegeben ist, aus der von der Bedienungsperson ein Eingabewert ausgewählt wird. Aus diesen eingegebenen Werten berechnet dann die Hauptrecheneinheit einen zugehörigen Verzögerungszeitwert, wobei beispielsweise ein größerer Eingabewert einer längeren Verzögerungszeit zugeordnet ist.

Da insbesondere beim Einschalten in der Abenddämmerung andere Verzögerungszeiten des Dämmerungsschalters benötigt werden, als in der Morgendämmerung, kann die Bedienungsperson, um Fehlschaltungen zu vermeiden, die benötigten Verzögerungswerte in unterschiedlichen Größen eingeben, so daß die entsprechenden Bedingungen direkt am Einsatzort in einfacher Weise berücksichtigt werden können. Diese Einschaltverzögerungswerte bzw. Ausschaltverzögerungswerte sind vorgesehen, um Fehlschaltungen bei Lichtschwankungen, welche beispielsweise durch kurzzeitige Verdunklung durch Bewölkung oder durch kurzzeitige Aufhellungen durch Blitzschlag oder Fahrzeugscheinwerfer auftreten können, möglichst auszuschließen. D.h., daß der Schaltvorgang durch den Dämmerungsschalter bei vorliegendem der Schaltschwelle entsprechendem Sensorsignal erst nach Ablauf der Verzögerungszeit bewirkt wird, wenn innerhalb dieser Verzögerungszeit das Sensorsignal im wesentlichen unverändert bleibt.

Zur Berücksichtigung der Bauteiltoleranzen von Lichtsensoren kann gemäß Anspruch 7 vorgesehen sein, daß für die Kennlinie des Lichtsensors zum Ausgleich dieser Bauteiltoleranz Korrekturwerte eingebbar sind, so daß die Größe des Sensorsignals, welches an die Hauptrecheneinheit übergeben wird, unterschiedlicher Lichtsensoren stets eindeutig demselben Helligkeitswert zuordenbar ist. Damit ist sichergestellt, daß ein Schaltvorgang bei vorgegebenen, numerischen Schwellwerten stets bei derselben Helligkeit erfolgt.

Gemäß Anspruch 8 kann vorgesehen sein, daß dem Lichtsensor eine eigene Recheneinheit sowie ein eigener Speicherbereich zugeordnet ist, in welchen die Korrekturwerte eingebbar sind. Die Recheneinheit des Lichtsensors berechnet aus den eingegebenen Korrekturwerten unabhängig von der Hauptrecheneinheit des Dämmerungsschalters eine korrigierte Kennlinie, so daß die Kombination aus Lichtsensor, eigener Recheneinheit sowie eigenem Speicherbereich, stets bei gleichem Helligkeitswert an die Hauptrecheneinheit auch stets das gleiche Steuersignal abgibt.

Gemäß Anspruch 9 kann vorgesehen sein, daß sämtliche Komponenten des Dämmerungsschalters in einem gemeinsamen Gehäuse untergebracht sind und daß die Recheneinheiten und die Steuereinheiten in einem Micro-Controller integriert sind. Durch diese Ausgestaltung wird die Baugröße erheblich verringert, die auch die Installation des Dämmerungsschalters erheblich vereinfacht.

Gemäß Anspruch 10 kann vorgesehen sein, daß der Lichtsensor mit seiner Recheneinheit und seinem Speicherbereich eine separate Einheit bildet und extern, außerhalb des gemeinsamen Gehäuses, für die restlichen Komponenten des Dämmerungsschalters frei installierbar ist. Durch diese Ausgestaltung gemäß Anspruch 10, in Verbindung mit den Vorteilen gemäß Anspruch 8, kann jede beliebige Kombination aus Lichtsensor und Recheneinheit sowie Speicherbereich mit jedem Dämmerungsschalter, welcher die übrigen Komponenten enthält, kombiniert werden, wobei stets dieselben Schaltpunkte bei gleicher numerischer Einstellung der Helligkeitswerte erreichbar sind, da die Lichtsensoren mit ihrer Recheneinheit und ihrem Speicherbereich bei gleicher Umgebungshelligkeit stets dasselbe Steuersignal an die Hauptrecheneinheit liefert.

Anhand der Zeichnung wird nachfolgend ein Ausführungsbeispiel der Erfindung näher erläutert. Es zeigt:
- Fig. 1: ein vereinfachtes Blockschaltbild eines erfindungsgemäßen Dämmerungsschalters;
- Fig. 2a bis 2j: die Display-Anzeige in verschiedenen Betriebszuständen des Dämmerungsschalters.

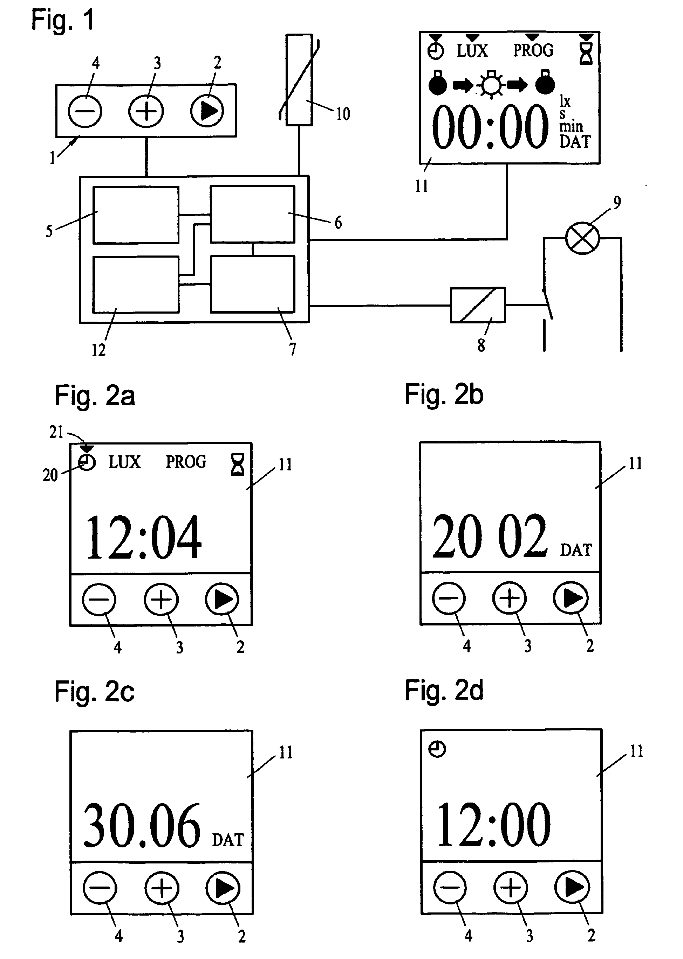

Der Dämmerungsschalter besteht erfindungsgemäß aus den nachfolgend bezeichneten Blöcken. Diese sind in Fig. 1 in einem Blockschaltbild dargestellt.

So weist der erfindungsgemäße Dämmerungsschalter eine Eingabeeinheit 1 auf, welche beim vorliegenden Ausführungsbeispiel insgesamt mit drei Eingabetasten 2, 3 und 4 versehen ist. Durch Betätigen dieser Eingabetasten 2 bis 4 wird der Dämmerungsschalter in unterschiedliche Betriebszustände geschaltet und programmiert. Anstatt dieser drei Eingabetasten 2, 3, 4 kann auch eine Blocktastatur vorgesehen sein, welche alle zehn Ziffern enthält. Eine solche Blocktastatur ist dann vorzuziehen, wenn auf eine optische Anzeige der Einstellwerte verzichtet wird, so daß die einzustellenden Werte über die Blocktastatur identifizierbar sind.

Bei dem vorliegenden Ausführungsbeispiel der Eingabeeinheit 1 ist die Eingabetaste 2 als Programmwahltaste ausgebildet, durch deren Betätigung unterschiedliche Programmiermodi einstellbar sind. Die Eingabetasten 3 und 4 dienen in den jeweiligen Programmiermodi zur Einstellung der einzelnen Betriebsparameter.

Desweiteren ist der erfindungsgemäße Dämmerungsschalter mit einer Speichereinheit 5 versehen, welche im wesentlichen zum Abspeichern der eingestellten Werte und der Korrekturwerte für die Kennlinie des Lichtsensors dient. Diese Speichereinheit 5 weist für die Übernahme von unterschiedlichen Einstellparametern verschiedene Speicherbereiche auf. So sind beispielsweise Speicherbereiche für die Eingabe eines Einschaltschwellwertes, eines Ausschaltschwellwertes, einer Sensorkennlinie, von Korrekturwerten zu dieser Sensorkennlinie, einer Einschaltzeitverzögerung und einer Ausschaltzeitverzögerung vorgesehen.

Desweiteren weist der Dämmerungsschalter eine Hauptrecheneinheit 6 auf, welche beim vorliegenden Ausführungsbeispiel zur Berechnung der korrigierten Kennlinie sowie zum Ermitteln des zugehörigen Helligkeitswertes dient.

Die Hauptrecheneinheit ist mit einer Vergleichs- und Steuereinheit 7 gekoppelt, welche zum Vergleich der eingestellten Helligkeitswerte mit den vorhandenen IstWerten dient und desweiteren eine Schalteinrichtung 8 ansteuert.

Diese Schalteinrichtung 8 dient bekanntermaßen zum Schalten einer Last, welche beim vorliegenden Ausführungsbeispiel als Beleuchtungseinrichtung 9 ausgebildet ist.

Desweiteren ist bei diesem Dämmerungsschalter selbstverständlich ein Lichtsensor 10 vorgesehen, dessen Sensorsignale der Hauptrecheneinheit zuführbar sind. Desweiteren weist der erfindungsgemäße Dämmerungsschalter eine Anzeigeeinheit beispielsweise in Form einer Display-Anzeige 11 auf, welche zum Anzeigen sowohl der Zeit als auch der eingestellten Werte dient. Zur Steuerung von zeitgesteuerten Schaltfunktionen ist desweiteren eine Zeitschaltuhr 12 vorgesehen.

Diese in Fig. 1 als Einzelelemente dargestellten Bausteine sind vorteilhafter Weise als Micro-Controller aufgebaut, der beispielsweise die genannten Blöcke 5, 6, 7 und 12 in einem Bauteil zusammenfaßt.

Die Speichereinheit 5 ist, wie oben angeführt, in mehrere Speicherbereiche aufgeteilt, welche zum Ablegen von verschiedenen Einstellwerten sowie der Sensorkennlinie als auch deren Korrekturwerte dient.

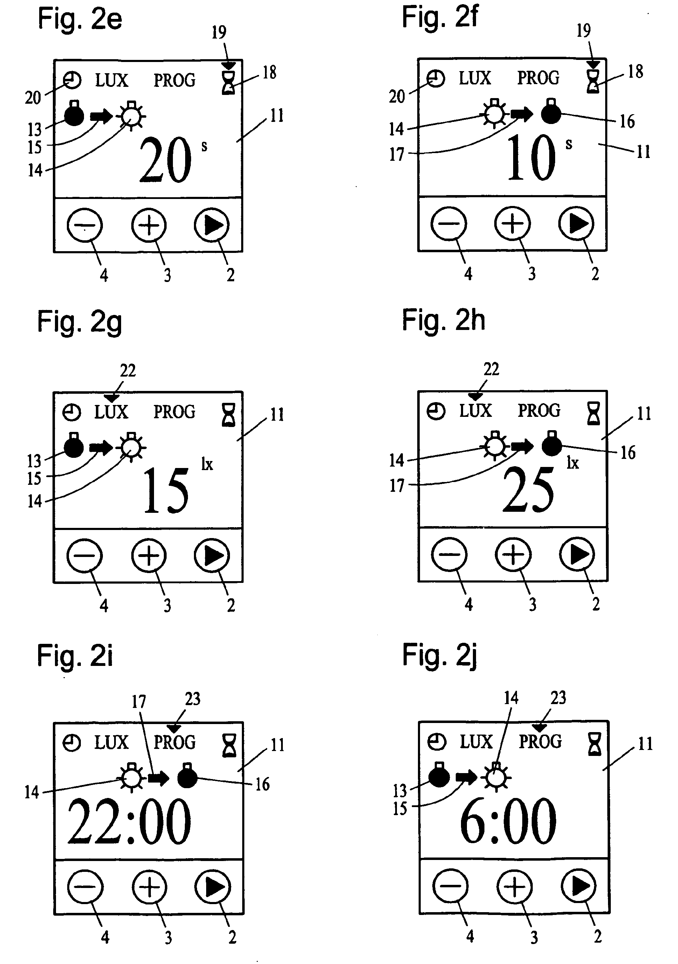

Im Ursprungszustand bzw. im Betriebszustand zeigt die Anzeigeeinheit 11, wie sie in unterschiedlichen Betriebszuständen den Fig. 2a bis 2j entnehmbar ist, die Darstellung aus Fig. 2a. Diese Standardansicht zeigt im normalen Betrieb des Dämmerungsschalters die aktuelle Uhrzeit an. Beim vorliegenden Ausführungsbeispiel sind die Eingabetasten 2 bis 4 integraler Bestandteil der Anzeigeeinheit 11. Zur Erkennung dieses "normalen" Betriebszustandes ist im linken, oberen Bereich der Display-Anzeige 11 ein Uhrensymbol 20 dargestellt, welche durch einen Markierungspfeil 21 markiert ist.

Die Eingabetaste 2 stellt beim vorliegenden Ausführungsbeispiel die Programmwahltaste dar, durch deren Betätigung der Dämmerungsschalter in unterschiedliche Betriebszustände schaltbar ist. So wird beispielsweise durch Betätigen dieser Programmwahltaste 2 der Dämmerungsschalter in einen Programmierzustand versetzt, in welchem das aktuelle Datum eingebbar ist.

So ist in Fig. 2b beispielsweise die Jahreszahl dargestellt, welche durch Betätigen der Eingabetasten 3 und 4 veränderbar ist. Durch Betätigen der Eingabetasten 3 findet beispielsweise eine Erhöhung der Jahreszahl und durch Betätigen der Eingabetaste 4 eine Verringerung der Jahreszahl statt, was durch eine entsprechende Symbolik auf den Eingabetasten 3 und 4 dargestellt ist. Desweiteren wird auf der Displayanzeige im Programmiermodus zur Datumseinstellung rechts neben der Jahreszahl der Ausdruck "DAT" dargestellt, so daß die Bedienungsperson erkennen kann, daß sie sich in diesem Programmiermodus befindet.

Ist die korrekte Jahreszahl, beispielsweise "2002", eingestellt, so wird erneut die Programmwahltaste 2 betätigt, so daß der Dämmerungsschalter in den Programmierzustand zur Eingabe von Monat und Tag in den in Fig. 2c dargestellten Programmierzustand versetzt wird. In diesem Zustand kann beispielsweise zunächst der rechts stehende Monat auf den korrekten Wert eingestellt werden, indem in entsprechender Weise die Tasten 3 und 4 zur Erhöhung bzw. zur Verringerung des Zahlenwertes betätigt werden. Auch hier ist rechts neben der Datumsanzeige der Ausdruck "DAT" dargestellt.

Durch erneutes Drücken der Programmwahltaste 2 gelangt der Dämmerungsschalter in den Programmodus zur Eingabe des Monatstages, welcher in Fig. 2c in der linken Hälfte der Display-Anzeige durch zwei Ziffernstellen dargestellt ist. Durch erneutes Betätigen der Eingabetasten 3 und 4 kann somit der korrekte Monatstag eingestellt werden. Ist dieser Vorgang abgeschlossen, so kann durch erneutes Betätigen der Programmwahltaste 2 der Dämmerungsschalter in den in Fig. 2d dargestellten Programmierzustand versetzt werden, in welchem die korrekte Uhrzeit ebenfalls über die Eingabetasten 3 und 4 einstellbar ist. Damit die Bedienungsperson erkennen kann, daß sie sich im Zeiteinstellmodus befindet, ist im linken oberen Bereich der Display-Anzeige das Uhrensymbol 20 dargestellt und der Ausdruck "DAT" ausgeblendet.

Es kann alternativ zu der oben beschriebenen Programmierung der Datumseingabe auch vorgesehen sein, daß diese Datumseingabe nur beim Erstbetrieb oder nach Durchführung eines "Reset" zugelassen bzw. möglich ist. Dies deshalb, damit nicht unnötig viele Wechsel zwischen den Programmiermodi erfolgen müssen, um zu den nachfolgend noch beschriebenen weiteren Programmiermodi zu gelangen. Für einen "Reset" des Dämmerungsschalters kann beispielsweise vorgesehen sein, daß die Progammwahltaste 2 über einen längeren Zeitraum, z.B. 3 Sekunden, betätigt wird und der Dämmerungsschalter danach in eine werkseitig voreingestellte Grundeinstellung zurück gesetzt wird. Des weiteren kann ein "Reset" beispielsweise auch dadurch erfolgen, daß die Eingabetasten 3 und/oder 4 in Kombination untereinander oder in Kombination mit der Programmwahltaste 2 gleichzeitig betätigt werden.

Durch weiteres Betätigen der Programmwahltaste 2 gelangt man beispielsweise in den Ursprungszustand von Fig. 2a. Aus diesem heraus gelangt die Bedienungsperson in die in den Fig. 2e bis Fig. 2j dargestellten weiteren Programmiermodi.

So stellt Fig. 2e den Programmiermodus zum Einstellen einer Einschaltverzögerungszeit dar. Diese Einschaltverzögerungszeit wird, wie bereits in der Beschreibungseinleitung erwähnt, dazu benötigt, Fehlschaltungen bei kurzzeitigen Änderungen der Umgebungshelligkeiten zu verhindern. Die Einschaltverzögerungszeit, die in der Darstellung gemäß Fig. 2e einzustellen ist, ist die Verzögerungszeit, welche in Sekunden zur Ansprechverzögerung bei Erreichen des Einschaltschwellwertes der Umgebungshelligkeit benötigt wird. Dies ist beispielhaft durch Symbole einer "ausgeschalteten" Lampe 13 sowie einer "eingeschalteten" Lampe 14 und dem, von der ausgeschalteten Lampe 13 zur eingeschalteten Lampe 14 hin weisenden Pfeil 15, dargestellt. Daraus kann die Bedienungsperson erkennen, daß sie sich nun im Einstellmodus befindet, welcher die Einschaltung eines Verbrauchers betrifft.

Hinter dem numerisch angegebenen Zahlenwert ist ein kleines "**s**" erkennbar, welches der Bedienungsperson anzeigt, daß die eingegebenen Werte Zeitwerte in Sekunden sind. Außerdem ist im oberen, rechten Anzeigebereich ein Sanduhrsymbol 18 dargestellt, welches durch den Markierungspfeil 19 markiert ist. Hieraus erkennt die Bedienungsperson, daß es sich beim vorliegenden Einstellmodus um die Einstellung der Einschaltverzögerungszeit handelt und nicht etwa um die Einstellung der normalen Uhrzeit. Die numerischen Zahlenwerte für die Einschaltverzögerungszeit lassen sich nun wiederum durch Betätigen der Eingabetasten 3 und 4 nach oben oder nach unten verändern.

Ist die Einschaltverzögerungszeit für das abendliche Einschalten korrekt eingegeben, so wird wiederum die Programmwahltaste 2 betätigt, so daß man beispielsweise in den in Fig. 2f dargestellten Programmiermodus für die Einstellung der Ausschaltverzögerung gelangt. In diesem Falle ist rechts neben der "eingeschalteten" Lampe 14 eine weitere "ausgeschaltete" Lampe 16 dargestellt, auf welche wiederum ein Pfeil 17 ausgehend von der eingeschalteten Lampe 14 hinweist. Durch diese Darstellung ist für die Bedienungsperson erkennbar, daß sie sich im Programmiermodus zum Ausschalten eines Verbrauchers befindet. Auch ist in diesem Programmiermodus wiederum das Sanduhrsymbol 18 durch den Markierungspfeil 19 markiert.

Desweiteren ist wiederum in der Display-Anzeige 11 hinter der Zahlenkombination 10 der Buchstabe "**s**" angegeben, so daß die Bedienungsperson auch hieraus erkennen kann, daß sie hier die Ausschaltverzögerungszeit in Sekunden anpassen kann. Durch entsprechende Betätigung der Eingabetasten 3 und 4 ist dieser Wert wiederum beliebig nach oben und unten veränderbar.

Nach Einstellung der gewünschten Ausschaltverzögerungszeit wird wiederum die Programmwahltaste 2 gedrückt, so daß man beispielsweise in den in Fig. 2g dargestellten Programmiermodus zur Einstellung des Einschaltschwellwertes gelangt. Daß sich der Dämmerungsschalter hier wiederum im Programmiermodus zur Einstellung der Einschaltkriterien befindet, erkennt die Bedienungsperson an den Lampensymbolen 13 und 14 und den zwischen diesen befindlichem Pfeil 15. Weiter ist oberhalb dieser Lampensymbole 13 und 14 der Ausdruck "LUX" dargestellt und durch den Markierungspfeil 22 markiert, so daß erkennbar ist, daß nunmehr Helligkeitswerte in Lux einzugeben sind. Dies wird auch durch die Bezeichnung **"lx"** vermittelt, welche rechts neben dem Zahlenblock angezeigt wird.

Die Angabe, bei welchem Lux-Wert abends nun ein Verbraucher eingeschaltet werden soll, kann nun wiederum durch die Eingabetasten 3 und 4 eingestellt werden. Ist diese Einstellung vollzogen, so wird mittels der Programmwahltaste 2 der Programmiermodus beispielsweise in den in Fig. 2h dargestellten Modus zur Einstellung der Abschalthelligkeit bzw. des Schwellwertes für das Abschalten des Dämmerungsschalters am Morgen geschaltet. Auch hier kann die Bedienungsperson diesen Schaltmodus wiederum durch die Bezeichnung "**lx**" und der Lampensymbole 14 und 16 mit dem dazwischen liegenden Pfeil 17 erkennen. Auch der Ausdruck "LUX" ist in diesem Programmiermodus durch den Markierungspfeil 22 markiert, so daß dieser Programmiermodus durch die Bedienungsperson zweifelsfrei erkennbar ist.

Durch Betätigen der Eingabetasten 3 und 4 ist der einzustellende Helligkeitswert in Lux nun wiederum beliebig veränderbar, so daß nach Durchlaufen der Programmierschritte gemäß der Fig. 2e bis 2h der Dämmerungsschalter bezüglich der helligkeitsabhängigen Schaltvorgänge vollständig programmiert ist.

Um nun noch weitere Schaltfunktionen programmieren zu können, wird wiederum die Programmwahltaste 2 betätigt, so daß der Dämmerungsschalter in den Programmiermodus für eine Ausschaltzeit schaltet, wie dies beispielhaft in Fig. 2i dargestellt ist. Aufgrund der Anzeige als Zeitangabe mit dem dazwischen liegenden Doppelpunkt erkennt auch hier die Bedienungsperson in einfacher Weise, daß nun Zeiten einzugeben sind. Weiter befindet sich zur Erkennung dieses Programmiermodus oberhalb der Lampensymbole der Ausdruck "PROG", welcher durch den Markierungspfeil 23 markiert ist.

Im in Fig. 2i dargestellten Programmiermodus wird eine zeitgesteuerte Ausschaltzeit programmiert, welche beispielsweise für eine Nachtabschaltung, beim vorliegenden Ausführungsbeispiel ab 22.00 Uhr abends, erfolgt. Durch Betätigen der Eingabetasten 3 und 4 läßt sich diese Ausschaltzeit beliebig verändern.

Ist nun die gewünschte Ausschaltzeit eingestellt, so wird wiederum die Programmwahltaste 2 betätigt, so daß nunmehr eine früh morgendliche Einschaltzeit programmierbar ist, wie dies in Fig. 2j beispielhaft dargestellt ist. Beim vorliegenden Ausführungsbeispiel ist die Uhrzeit 6.00 Uhr morgens dargestellt. Daß es sich hier wiederum um eine Einschaltzeit handelt, erkennt die Bedienungsperson an der symbolhaften Darstellung der beiden Lampen 13, 14, dem dazwischen angeordneten Pfeil 15 sowie der Pfeilmarkierung 23 des Ausdruckes "PROG". Auch hier ist die Zeiteinstellung wiederum durch die Eingabetasten 3 und 4 durchführbar.

Nach korrekter Einstellung der Einschaltzeit wird nun wiederum die Programmwahltaste 2 betätigt, so daß der Dämmerungsschalter wiederum in seinen Ausgangszustand bzw. seinen normalen Betriebszustand gelangt, welcher durch die Darstellung der Display-Anzeige 11 in Fig. 2a dargestellt ist.

Um zwischen den einzelnen Programmiermodi wechseln zu können, kann auch vorgesehen sein, daß die Eingabetasten 3 und/oder 4 in Kombination untereinander oder in Kombination mit der Programmwahltaste 2 gleichzeitig betätigt werden. Dabei sei beispielhaft angegeben, daß mit der Eingabetaste 3 und der Programmwahltaste 2 der oben beschriebene "fortschreitende" Programmwechsel erfolgt und beispielsweise durch gleichzeitige Betätigung der Eingabetaste 4 und der Programmwahltaste 2 der Programmwechsel in entgegengesetzter Folge erfolgt. So könnte beispielsweise aus dem Programmiermodus der Fig. 2d durch gleichzeitiges Betätigen der Eingabetaste 4 und der Programmwahltaste 2 in den Programmiermodus der Fig. 2j gewechselt werden, anstatt in den Programmiermodus der Fig. 2e. Damit sind die einzelnen Programmiermodi wahlweise schneller erreichbar.

Durch die obige Funktionsbeschreibung des erfindungsgemäßen Dämmerungsschalters werden dessen Vorteile gegenüber herkömmlichen bzw. bisher bekannten Dämmerungschaltern deutlich.

So sind beim erfindungsgemäßen Dämmerungsschalter die gewünschten Schaltschwellen digital einstellbar und durch die Displayanzeige kontrollier- und korrigierbar. Damit entfällt eine nachträgliche Nachjustierung. Außerdem sind Geräte herstellbar, bei welchen bei identisch eingestellten Schaltschwellen die Schaltpunkte auch bei der gleichen Umgebungshelligkeit identisch vorliegen. Das besondere bei dieser Eingabe ist, daß die Schaltschwelle direkt in Lux eingegebenen wird. Der einstellbare Helligkeitsbereich liegt beispielsweise zwischen 2 lx und 200 lx.

Weiter sind die beiden Schaltschwellen für das abendliche Einschalten sowie das morgendliche Ausschalten unabhängig voneinander beliebig einstellbar, so daß auf Wunsch eine Schalthysterese von kleiner als 1 erreichbar ist. Damit können die physiologischen Eigenschaften des menschlichen Auges in einfacher Weise und individuell berücksichtigt werden, da diese durch einen Gewöhnungseffekt bedingen, daß die Beleuchtung nicht erst bei der im Vergleich zum Einschaltzeitpunkt höheren Helligkeit wieder ausgeschaltet zu werden bräuchte. Selbst bei gleicher Helligkeit wäre die Beleuchtungsquelle nicht mehr erforderlich, da sich das Auge bereits an die Dunkelheit gewöhnt hat. Somit ist die Beleuchtung bei einem Helligkeitswert abschaltbar, der unter dem Wert liegt, der zum Einschalten der Beleuchtung geführt hat. Also früher am Morgen.

Die integrierte Zeitschaltuhr bietet die Möglichkeit, die Beleuchtung unabhängig von der vorhandenen Helligkeit zeitabhängig zu schalten. Damit kann die Beleuchtung z.B. am Abend um 23:00 Uhr abgeschaltet und am Morgen um 4:00 Uhr wieder eingeschaltet werden. Somit kann die Beleuchtungsdauer den Erfordernissen angepaßt und Energie gespart werden. Es stehen mindestens 2 Schaltspeicher zur Verfügung. Hierbei ist ein Speicherplatz für einen Einschaltzeitpunkt und der zweite Speicherplatz für einen Ausschaltzeitpunkt reserviert.

Da wie schon oben erwähnt, die Toleranzen der zur Helligkeitserfassung verwendeten Bauteile (Fotowiderstand und Fotodiode) relativ groß sind, bereitet eine genaue Einstellung der Schaltschwellen bei herkömmlichen Dämmerungsschaltern Probleme. Bei erfindungsgemäßen Dämmerungsschalter sind diese Bauteiltoleranzen in einfacher Weise zu berücksichtigen. Dazu wird am Ende der Fertigung jeder Dämmerungsschalter auf den eingesetzten Lichtsensor abgeglichen. Dieser Abgleich läuft folgendermaßen ab:

Die Dämmerungsschalter werden während der Fertigung mittels einer Vorrichtung, mehreren (mindestens 2) definierten Helligkeitswerten ausgesetzt. Über eine Schnittstelle zu einem Computer wird das Gerät zur Messung der Helligkeit veranlaßt. Die ermittelten Werte für die gemessenen Sensorwerte werden zur Nachbildung der Bauteilkennlinie benutzt. Diese Nachbildung der Bauteilkennlinien wird anhand von Stützstellen in einem nicht flüchtigen Speicher auf einer im Dämmerungsschalter befindlichen Speichereinheit gespeichert (z.B. EEPROM oder FLASH). Im Dämmerungsschalter steht jetzt über die vorhandenen Stützstellen eine Nachbildung der Bauteilkennlinie zur Verfügung. Jeder gemessene Sensorwert wird nun mit dieser nachgebildeten Bauteilkennlinie verglichen und der dazugehörige Helligkeitswert ermittelt. Über diesen Abgleich der Dämmerungsschalter ist es möglich, die Helligkeitsmessung trotz Bauteiltoleranzen äußerst genau auszuführen.

Bei Dämmerungsschaltern mit externem Lichtsensor müssen die Bauteiltoleranzen ebenfalls korrigiert werden. Hier taucht allerdings die zusätzliche Schwierigkeit auf, daß kein Lichtsensor eindeutig zugeordnet werden kann. Da sowohl Dämmerungsschalter als auch der Lichtsensor separat gefertigt werden, ist nicht vorherzusehen, welcher Dämmerungsschalter mit welchem Lichtsensor zusammen verwendet wird. Daher ist in diesem Fall hier der Lichtsensor selbst mit einer Speichereinheit und einer Recheneinheit ausgerüstet. Damit übernimmt der Lichtsensor die Ermittlung des korrekten Lichtwertes wie oben beschrieben. Somit ist sichergestellt, daß jeder Dämmerungsschalter mit jedem Lichtsensor zusammen geschaltet werden kann.

Weiter ist die Erkennung, wann welche Schaltschwelle (Ein-/ Ausschalten) wirksam ist, über die vorhandene Uhrzeit in einfacher Weise erreichbar. So wird beispielsweise nach 12:00 Uhr Mittags automatisch die eingegebene Schaltschwelle für die Einschaltung berücksichtigt. Der Dämmerungsschalter schaltet dann beim Erreichen der eingestellten Schaltschwelle die Beleuchtung ein. Anschließend wird die Helligkeit periodisch immer wieder gemessen und erst wenn der Helligkeitswert die Schaltschwelle erreicht, wird die Beleuchtung wieder ausgeschaltet.

Zusätzlich bietet das Gerät die gleiche vorteilhafte Einstellung über Tasten und LCD-Anzeige auch für die Verzögerungszeiten. Bei den Verzögerungszeiten handelt es sich, wie bereits erwähnt, um eine einstellbare Zeitspanne vom Zeitpunkt an dem die Schaltschwelle erreicht wird bis zum Zeitpunkt an dem die Schalteinrichtung die Beleuchtung einschaltet. Bei der Verzögerungszeit handelt es sich um einen Zähler, der auf die gewünschte Zeit eingestellt ist und beim Start abwärts zählt. Wird ein Unter- oder Überschreiten der eingestellten Schaltschwelle erkannt, läuft der Zähler los. Ändert sich während der Verzögerungszeit die Helligkeit, so daß die Schaltschwelle jetzt nicht mehr erreicht ist, dann stoppt der Zähler und wird auf den Startwert zurückgesetzt. Bleibt die Schaltschwelle während der kompletten Verzögerungszeit unter- oder überschritten, so läuft der Zähler auf Null und ein Schaltvorgang wird ausgelöst. Der Dämmerungsschalter bietet wie bei den Helligkeitsschwellen zwei Speicherstellen für die Verzögerungszeit. Eine Speicherstelle für die Verzögerungszeit bei der Einschaltung am Abend und eine Speicherstelle für die Verzögerungszeit bei der Ausschaltung am Morgen.

## Patentansprüche

1. Programmierbarer Dämmerungsschalter bestehend aus einem ein zur Umgebungshelligkeit proportionales Steuersignal erzeugenden Lichtsensor (10), einer programmierbaren Hauptrecheneinheit (6), der das Steuersignal des Lichtsensors (10) zur Steuerung von Schaltvorgängen digitalisiert oder analog zuführbar ist, wobei die Hauptrecheneinheit (6) bei einem Einschalt , schwellwert des Steuersignals einen Verbraucher (9) einschaltet und diesen bei einem Ausschaltschwellwert des Steuersignals wieder ausschaltet, wobei die Helligkeitswerte der Schwellwerte, bei welchen eine Einschaltung und/oder eine Ausschaltung erfolgt als numerische Werte vorgebbar sind,
**dadurch gekennzeichnet,**
**daß** zur Zwischenspeicherung der Helligkeitswert der Schwellwerte ein Helligkeitsspeicherbereich vorgesehen ist, in welchen die Helligkeitswerte der Schwellwerte über Eingabetasten (2, 3, 4) einer Eingabeeinheit (1) als numerische Werte eingebbar sind, und
**daß** ein Kennlinienspeicherbereich zum Ablegen einer digitalisierten Kennlinie des Lichtsensors (10) vorgesehen ist, und
**daß** die Hauptrecheneinheit (6) aus den eingegebenen Helligkeitswerten der Schwellwerte, der Kennlinie des Lichtsensors und dem Steuersignal des Lichtsensors (10) die Schaltpunkte zum Ein- bzw. Ausschalten eines Verbrauchers (9) berechnet und,
**dass** zur Anzeige und Kontrolle der numerisch eingegebenen Helligkeitswerte eine Displayanzeige (11) vorgesehen ist.

2. Dämmerungsschalter nach Anspruch 1, **dadurch gekennzeichnet, daß** der Helligkeitsspeicherbereich in einen Einschaltspeicherbereich und einen Ausschaltspeicherbereich aufgeteilt ist und,
**daß** die Helligkeitswerte zum Einschalten separat in den Einschaltspeicherbereich und die Helligkeitswerte zum Ausschalten in den Ausschaltspeicherbereich eingebbar sind und,
**daß** die Hauptrecheneinheit (6) die Schaltpunkte zum Einschalten und Ausschalten unabhängig voneinander berechnet.

3. Dämmerungsschalter nach einem der Ansprüche 1 bis 2, **dadurch gekennzeichnet, daß** eine über die Eingabetasten (2, 3, 4) einstellbare Zeitschaltuhr (12) vorgesehen ist und,
**daß** zusätzlich zu den helligkeitsabhängigen Schaltpunkten über die Eingabetasten (2, 3,' 4) uhrzeitabhängige Schaltzeitpunkte zum Ein- und Ausschalten eingebbar sind und,
**daß** die aktuelle Uhrzeit sowie die eingestellten Schaltzeitpunkte im Display (11) anzeigbar sind.

4. Dämmerungsschalter nach Anspruch 3, **dadurch gekennzeichnet, daß** die Eingabeeinheit (1) eine Programmwahltaste (2) aufweist, deren Betätigung einen Wechsel des Programmiermodus bewirkt und,
**daß** dieser Programmwechsel in der Display-Anzeige (11) anzeigbar ist.

5. Dämmerungsschalter nach einem der Ansprüche 1 bis 4, **dadurch gekennzeichnet, daß** dem Einschaltspeicherbereich ein Einschaltverzögerungsspeicher zugeordnet ist, in welchen über die Eingabetasten (2, 3, 4) ein Einschaltverzögerungswert numerisch eingebbar ist und,
**daß** dem Ausschaltspeicherbereich ein Ausschaltverzögerungsspeicher zugeordnet ist, in welchen über die Eingabetasten ein Ausschaltverzögerungswert eingebbar ist und,
daß die eingestellten Verzögerungswert in der Display-Anzeige (11) anzeigbar sind.

6. Dämmerungsschalter nach einem der Ansprüche 1 bis 5, **dadurch gekennzeichnet, daß** für die Kennlinie des Lichtsensors (10) zum Ausgleich der Bauteiltoleranz Korrekturwerte eingebbar sind, so daß die Größe des Ausgangssignals unterschiedlicher Lichtsensoren stets eindeutig demselben Helligkeitswert zuordenbar ist und ein Schaltvorgang bei vorgegebenem, numerischem Schwellwert stets bei derselben Helligkeit erfolgt.

7. Dämmerungsschalter nach Anspruch 6, **dadurch gekennzeichnet, daß** dem Lichtsensor (10) eine eigene Recheneinheit sowie ein eigener Speicherbereich zugeordnet ist, in welchen die Korrekturwerte eingebbar sind und,
**daß** die eigene Recheneinheit aus den eingegebenen Korrekturwerten eine korrigierte Kennlinie berechnet.

8. Dämmerungsschalter nach einem der Ansprüche 1 bis 7, **dadurch gekennzeichnet, daß** sämtliche Komponenten (1, 5, 6, 7, 8, 10, 11, 12) des Dämmerungsschalters in einem gemeinsamen Gehäuse unterbracht sind und,
**daß** die Recheneinheiten und die Speichereinheiten in einem Mikrocontroller integriert sind.

9. Dämmerungsschalter nach Anspruch 7, **dadurch gekennzeichnet, daß** der Lichtsensor (10) mit seiner Recheneinheit und seinem Speicherbereich eine separate Einheit bildet und extern, außerhalb des gemeinsamen Gehäuses für die restlichen Komponenten (1, 5, 6, 7, 8, 11, 12) frei installierbar ist.

## Claims

1. Programmable ambient-light switch comprising a light sensor (10) generating a control signal proportional to the brightness of the environment, a programmable main computer unit (6), to which the control signal of the light sensor (10) for controlling switching procedures can be supplied in digital or analogue form, whereby the main computer unit (6) at a switch-on threshold level of the control signal switches on a consumer unit (9) and switches the latter off again at a switch off threshold level of the control signal, whereby the brightness levels of the thresholds, at which switching on or off occurs, can be given as numerical values, **characterised in that** for the intermediate storage of the brightness level of the threshold levels a brightness memory area is provided, in which the brightness levels of the threshold values can be entered via keys (2, 3, 4) as numerical values into an input unit (1), and **in that** a characteristic curve memory area for storing a digitalised characteristic curve of the light sensor (10) is provided, and **in that** the main computer unit (6) calculates the switch points for switching the consumer unit (9) on or off from the entered brightness levels of the threshold values, the characteristic curve of the light sensor and the control signal of the light sensor (10), and **in that** for displaying and checking the numerically entered brightness levels a display (11) is provided.

2. Ambient-light switch according to claim 1, **characterised in that** the brightness memory area is divided into a switch on memory area and a switch off memory area, and **in that** the brightness levels for switching on can be entered separately into the switch on memory area and the brightness levels for switching off can be entered into the switch off memory area, and **in that** the main computer unit (6) calculates the switching points for switching on and off independently of one another.

3. Ambient-light switch according to one of claims 1 to 2, **characterised in that** a timer (12) is provided that can set via the input keys (2, 3, 4), and **in that** in addition to the brightness-dependent switch points time-dependent switch time points for switching on and off can be entered via the input keys (2, 3, 4) and **in that** the current time and the set times can be shown on the display (11).

4. Ambient-light switch according to claim 3, **characterised in that** the input unit (1) comprises a program selection key (2), which when activated changes the programming mode, and **in that** this program change can be shown in the display (11).

5. Ambient-light switch according to one of claims 1 to 4, **characterised in that** a switch on delay memory is allocated to the switch on memory area in which a switch on delay value can be entered numerically via the input keys (2, 3, 4), and **in that** a switch off delay memory is allocated to the switch off memory area in which via the input keys a switch off delay value can be entered, and **in that** the set delay value can be shown in the display (11).

6. Ambient-light switch according to one of claims 1 to 5, **characterised in that** for the characteristic curve of the light sensor (10) correction values can be entered for correcting the component tolerance, so that the value of the output signal of different light sensors can be always be allocated clearly to the same brightness level, and a switching procedure is always performed at a predetermined, numerical threshold level at the same brightness.

7. Ambient-light switch according to claim 6, **characterised in that** a separate computer unit and a separate memory area are allocated to the light sensor (10), in which the correction values can be entered, and **in that** the separate computer unit calculates a corrected characteristic curve from the entered correction values.

8. Ambient-light switch according to one of claims 1 to 7, **characterised in that** all of the components (1, 5, 6, 7, 8, 10, 11, 12) of the ambient-light switch are accommodated in a common housing, and **in that** the computer units and the memory units are integrated into a microcontroller.

9. Ambient-light switch according to claim 7, **characterised in that** the light sensor (10) with its computer unit and its memory area forms a separate unit, and can be freely installed externally outside the common housing for the remaining components (1, 5, 6, 7, 8, 11, 12).

## Revendications

1. Interrupteur crépusculaire programmable, composé d'un capteur de lumière (10) générant un signal de commande proportionnel à la luminosité ambiante, une unité de calcul principale programmable (6) à laquelle le signal de commande du capteur de lumière (10) peut être amené sous forme numérisée ou analogique pour commander des processus de commutation, l'unité de calcul principale (6) mettant en circuit un consommateur (9) à une valeur seuil d'activation ou de mise en circuit du signal de commande et le remettant hors circuit à une valeur seuil de désactivation ou de mise hors circuit du signal de commande, les valeurs de luminosité des valeurs seuils auxquelles ont lieu une mise en circuit et/ou une mise hors circuit étant prescriptibles sous forme de valeurs numériques,
**caractérisé par le fait**
**qu'**il est prévu pour la mémorisation temporaire de la valeur de luminosité des valeurs seuils une zone mémoire de luminosité dans laquelle les valeurs de luminosité des valeurs seuils peuvent être entrées sous forme de valeurs numériques au moyen de touches d'entrée (2, 3, 4) d'une unité d'entrée (1), et
**qu'**il est prévu une zone mémoire de courbe caractéristique pour stocker une courbe caractéristique numérisée du capteur de lumière (10), et
**que** l'unité de calcul principale (6) calcule les points de commutation pour la mise en circuit et/ou hors circuit d'un consommateur (9) à partir des valeurs de luminosité des valeurs seuils entrées, de la courbe caractéristique du capteur de lumière et du signal de commande du capteur de lumière (10), et
**qu'**il est prévu un écran d'affichage (11) pour l'affichage et le contrôle des valeurs de luminosité entrées sous forme numérique.

2. Interrupteur crépusculaire selon la revendication 1, **caractérisé par le fait que** la zone mémoire de luminosité est divisée en une zone mémoire de mise en circuit et une zone mémoire de mise hors circuit, et
**que** les valeurs de luminosité pour la mise en circuit peuvent être entrées séparément dans la zone mémoire de mise en circuit et les valeurs de luminosité pour la mise hors circuit dans la zone mémoire de mise hors circuit, et
**que** l'unité de calcul principale (6) calcule les points de commutation pour la mise en circuit et la mise hors circuit indépendamment l'un de l'autre.

3. Interrupteur crépusculaire selon l'une des revendications 1 à 2, **caractérisé par le fait qu'**il est prévu une horloge de commande (12) réglable au moyen des touches d'entrée (2, 3, 4), et
**qu'**en plus des points de commutation dépendants de la luminosité, il est possible d'entrer au moyen des touches d'entrée (2, 3, 4) des instants de commutation dépendant de l'heure pour la mise en circuit et hors circuit, et
**que** l'heure actuelle ainsi que les instants de commutation réglés peuvent être affichés sur l'écran (11).

4. Interrupteur crépusculaire selon la revendication 3, **caractérisé par le fait que** l'unité d'entrée (1) présente une touche de sélection de programme dont l'actionnement provoque un changement de mode de programmation, et
**que** ce changement de programme peut être affiché sur l'écran d'affichage (11).

5. Interrupteur crépusculaire selon l'une des revendications 1 à 4, **caractérisé par le fait qu'**une mémoire de retard à la mise en circuit, dans laquelle il est possible d'entrer une valeur de retard à la mise en circuit sous forme numérique au moyen des touches d'entrée (2, 3, 4), est associée à la zone mémoire de mise en circuit, et
**qu'**une mémoire de retard à la mise hors circuit, dans laquelle il est possible d'entrer une valeur de retard à la mise hors circuit au moyen des touches d'entrée, est associée à la zone mémoire de mise hors circuit, et
**que** les valeurs de retard réglées peuvent être affichées sur l'écran d'affichage (11).

6. Interrupteur crépusculaire selon l'une des revendications 1 à 5, **caractérisé par le fait qu'**il est possible d'entrer des valeurs de correction pour la courbe caractéristique du capteur de lumière (10) pour compenser la tolérance des composants afin que la grandeur du signal de sortie de différents capteurs de lumière puisse toujours être associée sans ambiguïté à la même valeur de luminosité et qu'un processus de commutation se produise toujours à la même luminosité pour une valeur seuil numérique prescrite.

7. Interrupteur crépusculaire selon la revendication 6, **caractérisé par le fait qu'**au capteur de lumière (10) sont associées une unité de calcul propre ainsi qu'une zone mémoire propre dans lesquelles les valeurs de correction peuvent être entrées, et
**que** l'unité de calcul propre calcule une courbe caractéristique corrigée à partir des valeurs de correction entrées.

8. Interrupteur crépusculaire selon l'une des revendications 1 à 7, **caractérisé par le fait que** tous les composants (1, 5, 6, 7, 8, 10, 11, 12) de l'interrupteur crépusculaire sont logés dans un boîtier commun, et
**que** les unités de calcul et les unités de mémoire sont intégrées dans un microcontrôleur.

9. Interrupteur crépusculaire selon la revendication 7, **caractérisé par le fait que** le capteur de lumière (10) avec son unité de calcul et sa zone mémoire forme une unité séparée et peut être installé librement de manière externe, en dehors du boîtier commun pour les autres composants (1, 5, 6, 7, 8, 10, 11, 12).
